# EUROPÄISCHE PATENTSCHRIFT

(11) **EP 4 657 143 B1**
(45) Veröffentlichungstag und Bekanntmachung des Hinweises auf die Patenterteilung: **02.12.2026**
(21) Anmeldenummer: 24179186.2
(22) Anmeldetag: 31.05.2024
(51) Int. Cl.: G02C 5/22

(54) **SCHARNIER FÜR EINE BRILLE**
HINGE FOR SPECTACLES
CHARNIÈRE POUR LUNETTES

(43) Veröffentlichungstag der Anmeldung: 03.12.2025
(73) Patentinhaber: Zaza, Mohamed Diab, 12207 Berlin (DE)
(72) Erfinder: Zaza, Mohamed Diab, 12207 Berlin (DE)

(56) Entgegenhaltungen:
- EP-A1- 2 980 631
- EP-A1- 3 379 323
- CN-U- 201 876 621
- US-A1- 2008 137 029
- US-A1- 2015 029 457

## Beschreibung

Die Erfindung betrifft ein Scharnier für eine Brille.

Brillengestelle und Brillenscharniere sind in vielen Varianten bekannt. Die Brille ist dabei ein häufig benutzter Alltagsgegenstand. Neben einer ansprechenden modischen Erscheinung einer Brille ist es wichtig, dass die Brille angenehm zu tragen und gleichzeitig robust ist.

Aus der US 2008137029 ist eine Brille aus Flachmaterial bekannt, bei der eine Klammer die offenen Enden der Fassung zusammenhält.

Aus der EP 1 754 097 A1 ist ein Brillengestell mit einer frontalen Brillenfassung, Verbindungsklammern und zwei Brillenbügel bekannt. Das Brillengestell weist zwei ineinandergreifende Anschlusslaschen auf, die dazu dienen, ein Brillenglas zu fixieren. Die Verbindungsklammern umgreifen die Anschlusslaschen an einem Ende des Brillenbügels und verbinden die frontale Brillenfassung mit den Brillenbügeln.

Die WO 2017 207 847 A1 offenbart ein weiteres Brillengestell mit einer Front, zwei Brillenbügeln und zwei Verbindungsclips. Die Verbindungsclips sind dabei an der Front befestigt und weisen einen hakenförmigen Vorsprung auf, der in eine Aussparung an den Brillenbügeln eingreift.

Die EP 1 745 325 B1 offenbart ein weiteres Brillengestell, das eine Front und zwei Brillenbügeln umfasst. Die Brillenbügel sind so ausgebildet, dass sie einen Endabschnitt der Front teilweise umfassen. Für eine feste Verbindung sieht die Druckschrift eine Schraubverbindung vor.

Nachteilig an bekannten Brillenscharnieren oder Brillengestellen ist es, dass diese komplexe Geometrien aufweisen und daher weniger stabil und wartungsarm sind.

Hiervon ausgehend liegt der vorliegenden Erfindung die Aufgabe zugrunde, ein verbessertes Scharnier für eine Brille und ein verbessertes Brillengestell bereitzustellen.

Diese Aufgabe wird erfindungsgemäß durch ein Brillenscharnier mit den Merkmalen des Patentanspruchs 1 und ein Brillengestell mit den Merkmalen des Patentanspruchs 15 gelöst. Ausgestaltungen der Erfindung sind in den abhängigen Ansprüchen angegeben.

Danach betrifft die vorliegende Erfindung ein Brillenscharnier. Das Brillenscharnier umfasst eine Brillenfront, einen Brillenbügel mit einem gebogenen Ende und eine Verbindungsklammer, die dazu ausgebildet ist, auf einem seitlichen Ende der Brillenfront aufgesetzt zu werden. Dabei weist die Brillenfront und die Verbindungsklammer jeweils eine Außenwölbung auf, wobei die beiden Wölbungen im zusammengesetzten Zustand voneinander weg zeigend sind, sodass zwischen den Wölbungen ein Haltebereich für das gebogene Ende gebildet ist. Das gebogene Ende ist dabei in den Haltebereich einsetzbar und im eingesetzten Zustand im Haltebereich drehbar gelagert. Der Haltebereich und das gebogene Ende weisen zueinander korrespondierende Flächen auf, durch die mindestens zwei Einrastpositionen gebildet sind.

Das gebogene Ende des Brillenbügels ist nicht wie bei einem klassischen Brillenbügel gerade verlaufend ausgebildet ist, sondern endet in einer gerundeten Geometrie bzw. Kurve, um sich gegen eine gewölbte äußere Begrenzung anlegen zu können. Die erfindungsgemäße Lösung beruht auf dem Gedanken, dass die beiden Wölbungen von Brillenfront und Verbindungsklammer zusammen einen bauchigen Bereich ergeben, deren Innenseiten den Haltebereich bilden. Wenn das gebogene Ende des Brillenbügels in den Haltebereich eingesetzt ist, legt sich dieser gegen den Haltebereich flächig an. Die zueinander korrespondierenden Flächen des Haltebereichs und des gebogenen Endes sorgen dafür, dass der Brillenbügel in mindestens zwei Einrastpositionen verharren kann.

Für eine Verbindung des Brillenbügels mit der Brillenfront wird die Verbindungsklammer auf die Brillenfront gesetzt. Dabei bilden die Verbindungsklammer und die Brillenfront jeweils eine Hälfte des Haltebereichs. Im Anschluss kann der Brillenbügel mit dem gebogenen Ende in den durch die Verbindungsklammer und die Front gebildeten Haltebereich gesteckt werden.

Die Erfindung stellt damit ein Brillenscharnier dar, welches durch seine wenigen Bestandteile und seine einfache Geometrie ein geringes Gewicht aufweist. Darüber hinaus ist es leicht zu warten und zu reinigen. So ist es auch für einen normalen Nutze auf einfache Weise möglich, den Brillenbügel aus dem Haltebereich zu entnehmen oder einzusetzen, um Reinigungsarbeiten oder Verstellungen am Brillenbügel vorzunehmen.

Die Wölbungen können durch jeweils abstehende Laschen an der Verbindungsklammer und an der Brillenfront gebildet sein. Die Laschen stehen dabei in entgegengesetzte Richtung von der Verbindungsklammer bzw. von der Front ab und sind gleichzeitig zueinander zeigend umgebogen, sodass zwischen ihnen ein konvexer Raum gebildet ist, der den Haltebereich darstellt.

Das gebogene Ende des Brillenbügels im Sinne der Erfindung ist das Ende des Brillenbügels, das in dem Fall, wenn die Brille auf einen Kopf aufgesetzt ist, nicht am Ohr des Brillenträgers anliegt, sondern in Sichtrichtung eines Brillenträgers nach vorne zeigt und an der Brillenfront angeordnet ist. Die Brillenfront stellt den vorderen Teil eines Brillengestells dar, der typischerweise auf der Nase eines Brillenträgers sitzt und in den zwei Brillengläser eingesetzt werden können.

In einer Ausführungsvariante weist das Scharnier keine Befestigungsmittel auf. Insbesondere ist die Verwendung von Schrauben, Stiften oder anderer blockierender Elemente nicht vorgesehen.

Dabei kann das Scharnier ausschließlich aus drei Teilen bestehen, nämlich der Brillenfront, dem Brillenbügel und der Verbindungsklammer. Bei einer Brille mit zwei Brillenbügeln besteht das Brillengestell als Ganzes entsprechend aus fünf Teilen, nämlich der Brillenfront und jeweils zwei Brillenbügeln und zwei Verbindungsklammern bestehen.

Die Brillenfront weist dabei eine Fassung für zwei Brillengläser bilden, wobei die Fassung jeweils an einem seitlichen Ende der Front durchtrennt ist. Dadurch wird ein oberer Bereich und ein unterer Bereich der Fassung gebildet ist. Zum Einsetzen oder Herausnehmen der Brillengläser können die beiden Bereiche auseinandergeschoben werden. Die Brillengläser werden durch die beiden Bereiche eingefasst und gehalten. In der Mitte der Brillenfront, also im Bereich eines Nasenstegs der Brille verläuft die Fassung durchgehend.

Die Durchtrennung der Bereiche verläuft in Form eines Schlitzes, der sich von den Brillengläsern bis zu dem seitlichen Ende der Brillenfront erstreckt.

Die Brillenfront weist dabei an der Seite einen Knick auf und ist nach hinten umgebogen, sodass sich ein Ende der Front nicht in der Ebene der Brillengläser erstreckt, sondern nach hinten in Richtung der Ohren eines Brillenträgers erstreckt. Das seitliche Ende der Brillenfront ist dabei der Abschnitt hinter der Biegung.

Die Verbindungsklammer kann dazu ausgebildet sein, den oberen Bereich der Fassung und den unteren Bereich der Fassung zur Sicherung des Brillenglases gegeneinander zu fixieren. Die Verbindungsklammer kann die Bereiche von oben und von unten umgreifen, sodass der Schlitz zusammengehalten wird. Somit ist es auf einfache Weise auch für einen normalen Brillenbenutzer ohne Optikerausbildung möglich, die Brillengläser zu entnehmen und einzusetzen.

Die Brillenfront kann außerdem einen Hinterschnitt aufweisen, über den ein Formschluss mit der Verbindungsklammer gebildet wird. Dabei kann ein Überhang, der von dem Ende der Brillenfront hervorsteht und eine dazu passende Kerbe in der Verbindungsklammer vorgesehen sein. Wenn die Verbindungsklammer auf das seitliche Ende der Brillenfront geschoben wird, kann der Überhang in die Kerbe einrasten und anschließend verhindern, dass sich die Klammer von der Brillenfront wieder löst.

Der Haltebereich und das gebogene Ende des Brillenbügels können jeweils mehrere unterschiedlich stark gekrümmte Flächen aufweisen. Die Flächen bilden Teilbereiche, an denen das gebogene Ende und der Haltebereich gegeneinander aufliegen. Dabei kann insbesondere vorgesehen sein, dass gerade verlaufende Flächen so ausgebildet sind, dass sie in verschiedenen Stellungen so gegeneinander anliegen, dass eine Einrastposition gebildet ist. Beispielsweise kann für eine bestimmte Einrastposition vorgesehen sein, dass eine gerade verlaufende Fläche am gebogenen Ende des Brillenbügels gegen einen gerade verlaufenden Abschnitt der Innenseite der Wölbung anliegt.

In einer Ausführungsvariante ist das gebogene Ende des Brillenbügels flexibel ausgebildet und im eingesetzten Zustand elastisch verformt. Dabei ist der Haltebereich im Vergleich zum gebogenen Ende eng ausgebildet, sodass das gebogene Ende im Haltebereich unter Spannung steht, weil es ineinander gedrückt wird.

Dabei kann das gebogene Ende des Brillenbügels insbesondere schneckenförmig verlaufen und bei einer elastischen Verformung komprimiert sein. Das schneckenförmige gebogene Ende bildet dabei eine Art Feder, durch die sich das gebogene Ende gegen den Haltebereich verspannt.

Alternativ oder zusätzlich ist es möglich, dass die Außenwölbungen der Verbindungsklammer und der Brillenfront flexibel ausgebildet sind. Dabei kann vorgesehen sein, dass durch Einführung des gebogenen Endes in den Haltebereich, dieser elastisch verformt wird und eine Rückstellkraft auf das gebogene Ende wirkt.

In einem Erfindungsbeispiel können die Wölbungen dazu ausgebildet sein, mit einer Federkraft das gebogene Ende zwischen den Wölbungen einzuklemmen. Dabei kann beispielsweise vorgesehen sein, dass die Wölbungen aus federnden Streifen oder federnden Laschen gebildet sind, die beim Einsetzen des gebogenen Endes so verformt werden, dass eine Federkraft jeweils auf das gebogene Ende des Brillenbügels wirkt, das für eine Klemmung sorgt.

In einer Ausführungsvariante weist das Scharnier eine Sicherung gegen Herausfallen des Brillenbügels aus dem Haltebereich auf, indem das gebogene Ende so ausgebildet ist, dass es zum Einsetzen und Herausnehmen aus dem Haltebereich elastisch verformt werden muss. Mit anderen Worten, das gebogene Ende ist in dem Haltebereich festgeklemmt, sodass es zum Einsetzen oder Herausnehmen notwendig ist, das gebogene Ende zu komprimieren. Hierfür kann insbesondere vorgesehen sein, dass der Haltebereich eine Öffnung umfasst, durch die im Normalfall das gebogene Ende vom Brillenbügel nicht durchpassen würde, wenn es nicht leicht zusammen gebogen werden würde. Dabei kann insbesondere eine Lippe an der Öffnung vorgesehen sein. Insofern besteht eine Sicherung gegen Herausfallen des Brillenbügels aus dem Haltebereich, weil es nur mit einem gewissen Kraftaufwand möglich ist, das gebogene Ende aus dem Haltebereich zu entfernen.

In einer weiteren Erfindungsvariante weist das Scharnier eine erste Einrastposition in einem Winkel von 80°-100°, vorzugsweise 90° und eine zweite Einrastposition von 170°-190°, vorzugsweise 180° auf. Die Einrastpositionen werden durch die Gestaltung der korrespondierenden Flächen definiert. Der Winkel entspricht dabei dem Winkel, der sich zwischen der Haupterstreckungsrichtungen vom seitlichen Ende der Brillenfront und des Brillenbügels ergibt. Die erste Einrastposition entspricht einer eingeklappten Position, in der beispielsweise die Brille in einem Etui verstaut werden kann. Die zweite Position entspricht einer ausgeklappten Position, die der Position entspricht, wenn die Brille auf einem Kopf getragen wird.

In einer weiteren Erfindungsvariante weist das Scharnier eine dritte Einrastposition in einem Winkel von 125°-140°, vorzugsweise von 130°, auf. Diese Position entspricht einer teilweise ausgeklappten Zwischenposition. Diese Position ist vorteilhaft, wenn die Brille beispielsweise auf einer flachen Fläche abgelegt ist. Im Vergleich zur ausgeklappten Position nimmt sie dabei weniger Platz ein und ist geschützter gegen ein unbeabsichtigtes Beschädigen. Gleichzeitig kann sie im Gegensatz zur eingeklappten Position stabil auf der Fläche abgelegt ohne zu wackeln. Diese Position ist ferner vorteilhaft, wenn die Brille exponiert ausgestellt werden soll, beispielsweise in einem Optikergeschäft.

In einer weiteren Ausgestaltung der Erfindung besteht das Scharnier aus Metall. Beispielsweise kann das Scharnier ausschließlich aus einem Metall wie Titan, Aluminium oder Edelstahl bestehen. Diese Materialien erlauben es, ein besonders leichtes Scharnier und damit auch ein besonders leichtes Brillengestell bereitzustellen.

Ein weiterer Erfindungsaspekt betrifft ein Brillengestell, das zwei erfindungsgemäße Brillenscharniere umfasst. Dabei sind die beiden Brillenscharniere an einer Brillenfront jeweils an einem von zwei seitlichen Enden der Brillenfront angeordnet.

Die Erfindung wird nachfolgend unter Bezugnahme auf die Figuren der Zeichnung anhand mehrerer Ausführungsbeispiele näher erläutert. Es zeigen:
- Fig. 1: ein erstes Ausführungsbeispiel eines erfindungsgemäßen Brillenscharniers mit einer Brillenfront, einem Verbindungsclip und einem Brillenbügel, wobei der Brillenbügel in einer ausgeklappten Stellung ist;
- Fig. 2: das Ausführungsbeispiel der Fig. 1, bei der der Brillenbügel teilweise eingeklappt ist;
- Fig. 3 und 4: zwei perspektivische Darstellungen eines seitlichen Endes der Brillenfront, auf den der Verbindungsclip aufgesetzt werden kann;
- Fig. 5: zwei Darstellungen eines erfindungsgemäßen Verbindungsclips zur Verbindung des Brillenbügels mit der Brillenfront;
- Fig. 6: eine seitliche Darstellung eines erfindungsgemäßen Brillenbügels mit einem gebogenen Ende;
- Fig. 7 und 8: zwei perspektivische Darstellungen des Brillenscharniers im zusammengebauten Zustand;
- Fig. 9A-9E: schematische Darstellungen von Positionen des gebogenen Endes des Brillenbügels in dem Halteraum.

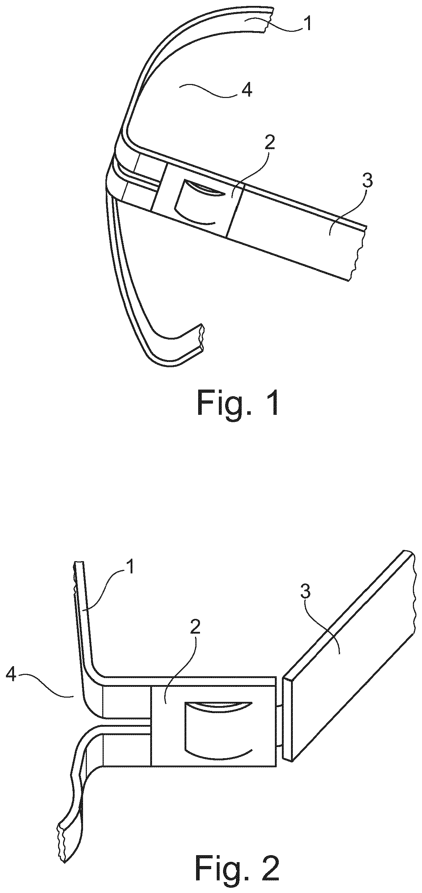

Die Figuren 1 und 2 stellen ein Brillenscharnier perspektivisch von außen dar. Das Scharnier wird durch eine Brillenfront 1, einen Brillenbügel 3 und eine Verbindungsklammer 2 gebildet. Die Brillenfront 1 bildet eine Fassung für ein Brillenglas 4. Befestigungselemente, wie Schrauben, sind nicht enthalten.

In der Fig. 1 ist der Brillenbügel 3 in einer ausgeklappten Position dargestellt. Dabei ist zwischen der Brillenfront 1 und dem Brillenbügel 3 ein Winkel von ca. 180° gebildet. In dieser Position wird die Brille durch einen Brillenträger auf dem Kopf getragen.

Die Fig. 2 zeigt das Brillenscharnier in einer halb-eingeklappten Position. Der Winkel zwischen der Brillenfront und dem Brillenbügel beträgt dabei ca. 130° (90° plus 40°). Diese Position stellt eine Zwischenposition des Brillenscharniers zwischen der ausgeklappten Position und einer eingeklappten Position dar. Bei der eingeklappten Position besteht ungefähr ein Winkel von 90° zwischen der Haupterstreckung des Brillenbügels 3 und des seitlichen Endes 10 der Brillenfront 1. In allen drei Positionen kann das Scharnier verrasten, sodass der Brillenbügel in der Winkelposition gehalten wird.

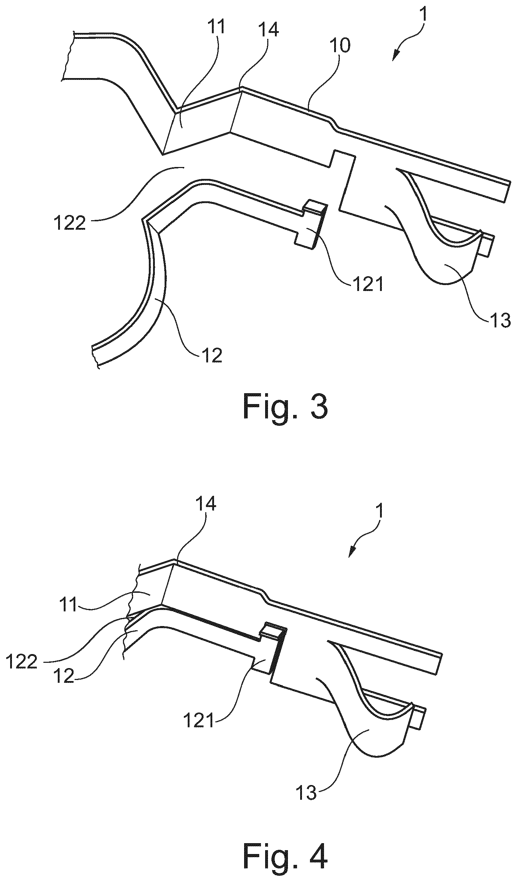

Die Figuren 3 und 4 stellen jeweils in einem Ausschnitt eine seitliche Ansicht auf die Brillenfront 1 dar. Die Front 1 weist an der Seite einen Knick 14 auf, hinter der ein seitliches Ende 10 der Front 1 sich nach hinten erstreckt. Die Richtungsangaben "vorne" und "hinten" orientieren sich in der Folge an der Blickrichtung eines nicht dargestellten Brillenträgers, der durch die Brille schaut.

Die Front 1 bildet eine Fassung für ein nicht dargestelltes Brillenglas mit einem oberen Bereich 11 und einem unteren Bereich 12. Dabei ist in der Mitte am Nasensteg der Brillenfront die Fassung durchgehend gestaltet. Die Bereiche 11, 12 sind jeweils außen durch einen Schlitz 122 voneinander getrennt. Der Schlitz 122 erstreckt sich bis in das seitliche Ende 10 der Brillenfront 1. Auf das seitliche Ende 10 kann die Verbindungsklammer 2 aufgeschoben werden, um die Bereiche 11, 12 gegeneinander zu fixieren.

In der Fig. 3 sind der obere Bereich 11 und der untere Bereich 12 auseinandergebogen und der Schlitz 122 aufgeweitet. In dieser Stellung kann auf einfache Weise ein Brillenglas 4 in die Brillenfront 1 eingesetzt oder herausgenommen werden.

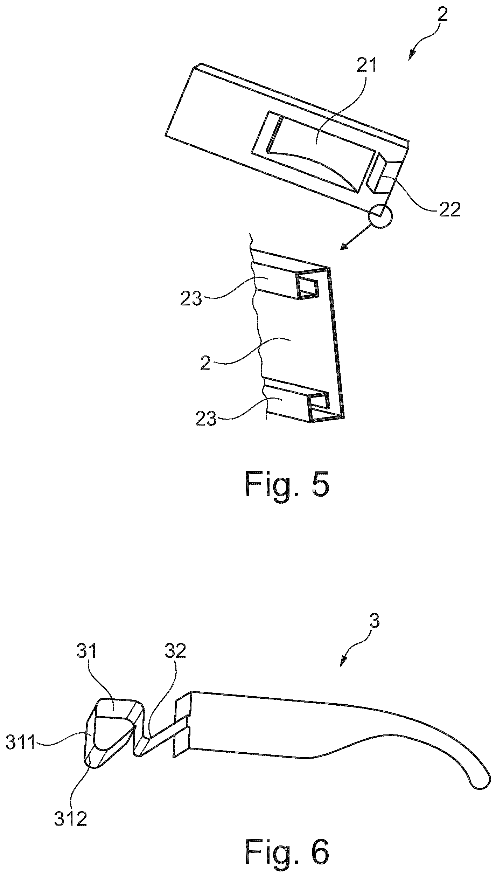

Um ein Öffnen des Schlitzes 12 zu verhindern, kann die in dieser Figur nicht dargestellte Verbindungsklammer 2 auf ein seitliches Ende 10 der Brillenfront 1 geschoben werden. Wie anhand der Fig. 5 gezeigt, fixiert die Verbindungsklammer das seitliche Ende 10 des Brillenbügels. Der Schlitz 122 wird zusammengehalten, sodass der obere Bereich 11 und der untere Bereich 12 das Brillenglas 4 fest umfassen.

Von dem unteren Bereich 12 steht eine Überhang 121 hervor, der zu einer Kerbe an der nicht dargestellten Verbindungsklammer 2 passt. Das seitliche Ende 10 des der Brillenfront 1 ist durch eine erste gewölbte Lasche 13 gekennzeichnet, die vom Rest der 1 in einem spitzen Winkel absteht. Die gewölbte Lasche 13 ist dazu ausgebildet, dass auf der Innenseite der Wölbung im Zusammenspiel mit der nicht dargestellten Verbindungsklammer 2 ein Halteraum gebildet ist, in dem ein gebogenes Ende des Brillenbügels 3 aufgenommen und gehalten werden kann (Fig. 6).

Die Fig. 5 stellt in zwei Darstellungen die Verbindungsklammer 2 dar. Die Verbindungsklammer 2 ist ein Blechteil, das an den Rändern 23 so umgebogen ist, dass es das seitliche Ende 10 der Brillenfront umgreifen kann, wie in der untenstehenden Darstellung gezeigt ist. Hierzu kann die Verbindungsklammer 2 mit den Rändern 23 auf das in Fig. 5 nicht dargestellte seitliche Ende 10 der Brillenfront 1 geschoben werden.

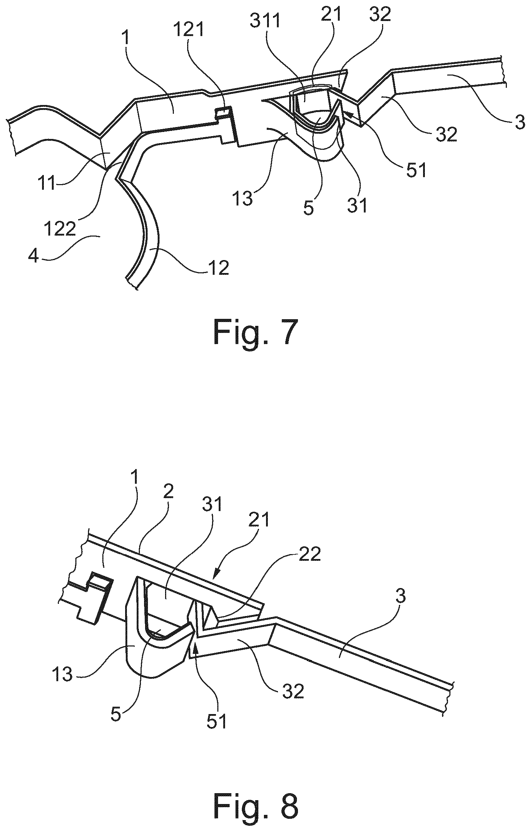

Ferner umfasst die Verbindungsklammer 2 eine zweite gewölbte Lasche 21. Die zweite Lasche 21 steht von der Verbindungsklammer 2 in einem Winkel kleiner als 90° ab und ist gleichzeitig zur ihr hin gewölbt ist. Im Zusammenspiel mit der nicht dargestellten ersten Lasche 13 von der Brillenfront 1, siehe Fig. 3, 4, bilden die beiden Laschen 13, 21 einen konvexen Haltebereich 5, siehe Fig. 7, 8. Ferner weist die Verbindungsklammer 2 einen Vorsprung 22 auf. Der Vorsprung 22 ist dazu ausgebildet, in eine passende Krümmung am Brillenbügel einzugreifen und diesen zu sichern. Er bildet in damit eine Art Lippe, die eine Öffnung 51 des Haltebereichs 5 verringert und verstärkt.

Die Fig. 6 zeigt einen erfindungsgemäßen Brillenbügel 3. Der Brillenbügel 3 weist ein gebogenes Ende 31 auf. Das gebogene Ende 31 ist ein schneckenförmig umgebogenes bzw. eingerolltes Blech. Es umfasst mehrere Flächen 311, 312, in denen das Blech unterschiedlich stark umgebogen ist. So umfasst es gerade verlaufende Flächen 311 und gebogene Flächen 312, an denen das Blech in einer engen Kurve verläuft.

Als gebogenes Ende 31 wird dabei der Bereich des Brillenbügels 3 bezeichnet, der dazu ausgebildet ist, in den anhand der Figuren 7 und 8 erläuterten Haltebereich 5 eingesetzt zu werden. Angrenzend zu dem gebogenen Ende 31 weist der Brillenbügel 3 eine Krümmung 32 auf. Die Krümmung 32 ist eine dem gebogenen Ende 31 entgegengesetzte Biegung. Durch die Krümmung 32 ist eine Auslassung gebildet, in die der Vorsprung 22 der Verbindungsklammer hineinragt und das gebogene Ende 31 des Brillenbügels 3 gegen ein Herausrutschen aus dem Haltebereich 5 sichert.

Die Figuren 7 und 8 stellen in einer Skizze das Brillenscharnier in zusammengebauten Zustand dar. Die Perspektive ist die eines Betrachters, der von innen auf das Brillenscharnier schaut. Dabei ist die aufgesetzte Verbindungsklammer 2 größtenteils durch das seitliche Ende 10 der Brillenfront 1 verdeckt, weil die Verbindungsklammer 2 hauptsächlich von außen die Brillenfront 1 umschließt, siehe Fig. 1 und 2. Grafisch angedeutet ist die zweite gewölbte Lasche 21, die eine Ausbuchtung in eine vom Betrachter entfernte Richtung darstellt.

Die beiden Laschen 13, 21 stehen dabei in entgegengesetzte Richtung ab und sind zueinander hin gewölbt. Gemeinsam bilden sie den bauchförmigen, bzw. konvexen Haltebereich 5. In den Haltebereich 5 ist das gebogene Ende 31 des Brillenbügels 3 eingesetzt. Das gebogene Ende 31 ist in dem Haltebereich 5 eingeklemmt, sodass es sich gegen den Haltebereich 5 lehnt und mit diesem unter Spannung steht. Das gebogene Ende wird, um in den Haltebereich 5 eingesetzt zu werden, beispielsweise durch die Öffnung 51 im Haltebereich 5 in diesen hineingedrückt, oder wird von oben in den Haltebereich 5 eingesetzt.

Die beiden Laschen 13, 21 können dabei symmetrisch zueinander ausgebildet sein oder zumindest eine symmetrische Wölbung aufweisen.

Die Laschen 13, 21 sind jeweils durch das gebogene Ende 31 nach außen gebogen und sorgen für eine in entgegengesetzte Richtung angreifende Federkraft auf das gebogene Ende 31. Das bedeutet, dass das gebogene Ende 31 zwischen den Laschen 13, 21 festgeklemmt ist, sodass eine Federkraft von beiden Seiten durch die erste Lasche 13 und durch die zweite Lasche 21 auf das gebogene Ende 31 wirkt.

In der Fig. 7 ist dargestellt, wie plan verlaufende Fläche 311 vom gebogenen Ende mit der Form des Haltebereichs 5 korrespondieren. Die durch Laschen 13, 21 erzeugte Haltekraft drückt auf die flach ausgebildete Fläche 311 des gebogenen Endes 31, sodass der Brillenbügel 3 in dieser Position gehalten wird und dort verrastet.

Die Fig. 8 stellt das Scharnier entsprechend der Fig. 7 in einem kleineren Ausschnitt dar. In dieser Darstellung ist erkennbar, wie der Vorsprung 22 von der Verbindungsklammer 2 eine Lippe bildet, die in die Krümmung 32 vom Brillenbügel 3 eingreift und damit ein Lösen des Brillenbügels 3 verhindert.

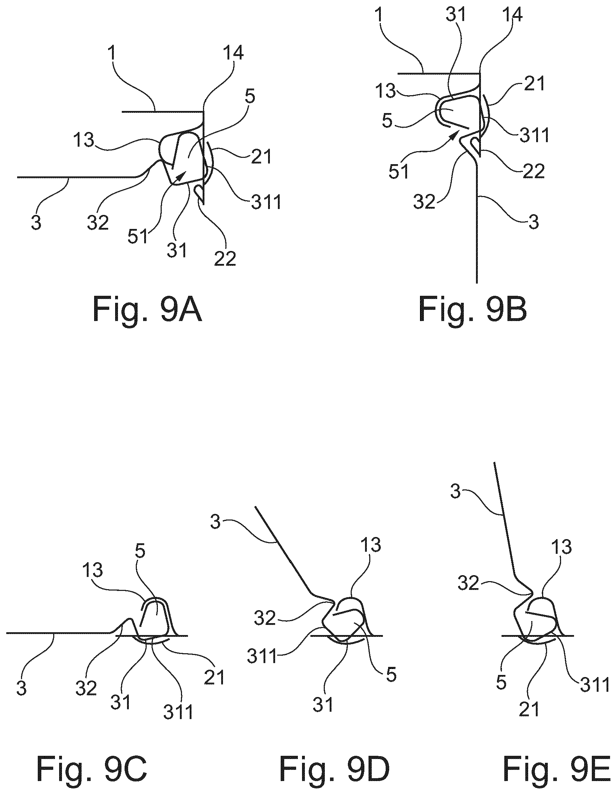

Die Figuren 9A-9E stellen schematisch verschiedene Stellungen des Scharniers dar. In der

Fig. 9A befindet sich der Brillenbügel 3 in einer eingeklappten Position. Zwischen der Haupterstreckungsrichtung des seitlichen Endes 10 der Brillenfront 1 und des Brillenbügels 3 besteht ein Winkel von etwa 90°. Dabei ist die Haupterstreckungsrichtung vom seitlichen Ende 10 der Front 1 nicht mit der Haupterstreckungsrichtung der gesamten Front 1 zu verwechseln, da die Front seitlich um 90° nach hinten gebogen ist.

Die Haltekraft zwischen den beiden Laschen 13, 21 klemmt dabei das gebogene Ende 31 des Brillenbügels so ein, dass die gerade verlaufende Fläche 311 am gebogenen Ende 31 gegen einen ähnlich geformten Abschnitt der zweiten Lasche 21 gedrückt und daher verrastet ist.

Die Fig. 9B stellt das Scharnier in der geöffneten Einrastposition bei einem Winkel von 180° dar. Auch hier schmiegt sich ein fast plan ausgebildete Fläche 311 gegen die passend geformte zweite Lasche 21 an, die den Haltebereich 5 definiert.

In den Figuren 9C-9E ist lediglich der Haltebereich 5 und der Brillenbügel 3 dargestellt. Die Fig. 9C entspricht der geöffneten Einrastposition aus der Fig. 9A und die Fig. 9E der eingeklappten Position aus 9A.

Die Fig. 9D zeigt eine dritte Einrastposition. Diese Position wurde bereits anhand der Fig. 2 beschrieben und ist eine teilweise eingeklappte Position. Auch hierbei ist der Bügel 3 im Haltebereich 5 eingerastet. Dabei lehnt sich eine plane Fläche 311 in einem Winkel an die Geometrie der zweiten Lasche 21 an und ist in dieser Position fixiert.

Es versteht sich, dass die Erfindung nicht auf die oben beschriebenen Ausführungsformen beschränkt ist und verschiedene Modifikationen und Verbesserungen vorgenommen werden können, ohne von den hier beschriebenen Konzepten abzuweichen. Weiter wird darauf hingewiesen, dass beliebige der beschriebenen Merkmale separat oder in Kombination mit beliebigen anderen Merkmalen eingesetzt werden können, sofern sie unter den Schutzbereich der Ansprüche fallen und sich nicht gegenseitig ausschließen. Die Offenbarung dehnt sich auf alle Kombinationen und Unterkombinationen eines oder mehrerer Merkmale aus, die hier beschrieben werden und umfasst diese. Sofern Bereiche definiert sind, so umfassen diese sämtliche Werte innerhalb dieser Bereiche sowie sämtliche Teilbereiche, die in einen Bereich fallen.

## Patentansprüche

1. Brillenscharnier, das umfasst
- eine Brillenfront (1),
- einen Brillenbügel (3) mit einem gebogenen Ende (31), und
- eine Verbindungsklammer (2), die dazu ausgebildet ist, auf einem seitlichen Ende (10) der Brillenfront (1) aufgesetzt zu werden,
- wobei die Brillenfront (1) und die Verbindungsklammer (2) jeweils eine Außenwölbung (13, 21) aufweisen und die beiden Außenwölbungen (13, 21) im zusammengesetzten Zustand voneinander weg zeigend sind, sodass zwischen den Wölbungen (13, 21) ein Haltebereich (5) für das gebogene Ende (31) gebildet ist, in den das gebogene Ende (31) des Brillenbügels (3) einsetzbar und im eingesetzten Zustand darin drehbar gelagert ist,
- wobei der Haltebereich (5) und das gebogene Ende (31) zueinander korrespondierende Flächen (311, 312) aufweisen, durch die mindestens zwei Einrastpositionen gebildet sind.

2. Scharnier nach Anspruch 1, **dadurch gekennzeichnet, dass** das Scharnier keine Befestigungsmittel, insbesondere keine Schrauben, aufweist.

3. Scharnier nach Anspruch 1 oder 2, **dadurch gekennzeichnet, dass** das Scharnier aus drei Teilen besteht, nämlich der Brillenfront (1), dem Brillenbügel (3) und der Verbindungsklammer (2).

4. Scharnier nach einem der vorangehenden Ansprüche, **dadurch gekennzeichnet, dass** die Brillenfront (1) für zwei Brillengläser (4) jeweils eine Fassung bildet, wobei die Fassung jeweils an einem seitlichen Ende (10) der Brillenfront (1) durchtrennt ist, sodass ein oberer Bereich (11) und ein unterer Bereich (12) der Fassung gebildet ist und die beiden Bereiche zum Ein- und Aussetzen von Brillengläsern (4) voneinander entfernbar sind.

5. Scharnier nach Anspruch 4, **dadurch gekennzeichnet, dass** die Verbindungsklammer (2) dazu ausgebildet ist, den oberen Bereich (11) der Fassung und den unteren Bereich (12) der Fassung zur Sicherung des Brillenglases (4) gegeneinander zu fixieren.

6. Scharnier nach einem der vorangehenden Ansprüche, **dadurch gekennzeichnet, dass** die Brillenfront (1) einen Hinterschnitt (121) aufweist, der dazu ausgebildet ist, mit der Verbindungsklammer (2) einen Formschluss zu bilden.

7. Scharnier nach einem der vorangehenden Ansprüche, **dadurch gekennzeichnet, dass** der Haltebereich und das gebogene Ende (31) des Brillenbügels (3) jeweils mehrere unterschiedlich stark gekrümmte Flächen (311, 312) aufweisen.

8. Scharnier nach einem der vorangehenden Ansprüche, **dadurch gekennzeichnet, dass** das gebogene Ende (31) des Brillenbügels (3) flexibel ausgebildet ist und im eingesetzten Zustand elastisch verformt ist.

9. Scharnier nach einem der vorangehenden Ansprüche, **dadurch gekennzeichnet, dass** die Außenwölbungen (13, 21) der Verbindungsklammer (2) und der Brillenfront (1) flexibel ausgebildet.

10. Scharnier nach Anspruch 9, **dadurch gekennzeichnet, dass** die Außenwölbungen (13, 21) dazu ausgebildet sind, mit einer Federkraft das gebogene Ende (31) zwischen den Wölbungen (13, 21) einzuklemmen.

11. Scharnier nach einem der vorangehenden Ansprüche, **dadurch gekennzeichnet, dass** das Scharnier eine Sicherung gegen Herausfallen des Brillenbügels aus dem Haltebereich (5) aufweist, indem das gebogene Ende (31) so ausgebildet ist, dass es zum Einsetzen und Herausnehmen aus dem Haltebereich (5) elastisch verformt werden muss.

12. Scharnier einem der vorangehenden Ansprüche, **dadurch gekennzeichnet, dass das Scharnier** eine erste Einrastposition in einem Winkel von 80°-100°, vorzugsweise 90°, und eine zweite Einrastposition von 170°-190°, vorzugsweise 180°, aufweist.

13. Scharnier nach Anspruch 12, **dadurch gekennzeichnet, dass das Scharnier** eine dritte Einrastposition in einem Winkel von 35°-50°, vorzugsweise 40°, aufweist.

14. Scharnier einem der vorangehenden Ansprüche, **dadurch gekennzeichnet, dass** das Scharnier aus Metall besteht.

15. Brillengestell, das zwei Brillenscharniere gemäß einem der vorangehenden Ansprüche umfasst.

## Claims

1. A spectacle hinge comprising
- a spectacle front (1),
- a temple (3) having a bent end (31), and
- a connecting clip (2) which is designed to be placed on a lateral end (10) of the spectacle front (1), wherein the spectacle front (1) and the connecting clip (2) each have an outward bulge (13, 21) and the two outward bulges (13, 21) point away from each other in the assembled state, so that a holding region (5) for the bent end (31) is formed between the bulges (13, 21), into which the bent end (31) of the temple (3) can be inserted and in which it is rotatably mounted in the inserted state,
- wherein the holding region (5) and the bent end (31) have mutually corresponding surfaces (311, 312) by means of which at least two latching positions are formed.

2. The hinge according to claim 1, **characterised in that** the hinge has no fastening means, in particular no screws.

3. The hinge according to claim 1 or 2, **characterised in that** the hinge consists of three parts, namely the spectacle front (1), the temple (3) and the connecting clip (2).

4. The hinge according to any one of the preceding claims, **characterised in that** the spectacle front (1) forms a rim for each of two spectacle lenses (4), the rim being split at a lateral end (10) of the spectacle front (1) in each case, so that an upper region (11) and a lower region (12) of the rim are formed and the two regions can be moved apart from each other for inserting and removing spectacle lenses (4).

5. The hinge according to claim 4, **characterised in that** the connecting clip (2) is designed to fix the upper region (11) of the rim and the lower region (12) of the rim relative to each other in order to secure the spectacle lens (4).

6. The hinge according to any one of the preceding claims, **characterised in that** the spectacle front (1) has an undercut (121) which is designed to form a form-fit connection with the connecting clip (2).

7. The hinge according to any one of the preceding claims, **characterised in that** the holding region and the bent end (31) of the temple (3) each have a plurality of surfaces (311, 312) with different degrees of curvature.

8. The hinge according to any one of the preceding claims, **characterised in that** the bent end (31) of the temple (3) is flexible and is elastically deformed in the inserted state.

9. The hinge according to any one of the preceding claims, **characterised in that** the outward bulges (13, 21) of the connecting clip (2) and of the spectacle front (1) are flexible.

10. The hinge according to claim 9, **characterised in that** the outward bulges (13, 21) are designed to clamp the bent end (31) between the bulges (13, 21) with a spring force.

11. The hinge according to any one of the preceding claims, **characterised in that** the hinge has a safeguard against the temple falling out of the holding region (5), **in that** the bent end (31) is designed so that it has to be elastically deformed to be inserted into and removed from the holding region (5).

12. The hinge according to any one of the preceding claims, **characterised in that** the hinge has a first latching position at an angle of 80°-100°, preferably 90°, and a second latching position at 170°-190°, preferably 180°.

13. The hinge according to claim 12, **characterised in that** the hinge has a third latching position at an angle of 35°-50°, preferably 40°.

14. The hinge according to any one of the preceding claims, **characterised in that** the hinge consists of metal.

15. A spectacle frame comprising two spectacle hinges according to any one of the preceding claims.

## Revendications

1. Charnière de lunettes, comprenant
- une face avant de monture (1),
- une branche de lunettes (3) comportant une extrémité courbée (31), et
- une agrafe de liaison (2) conçue pour être glissée sur une extrémité latérale (10) de la face avant de la monture (1), la face avant de la monture (1) et l'agrafe de liaison (2) présentant chacune une courbure extérieure (13, 21) et les deux courbures extérieures (13, 21) étant orientées à l'opposé l'une de l'autre à l'état assemblé, de sorte qu'une zone de maintien (5) de l'extrémité courbée (31) est formée entre les courbures (13, 21), zone de maintien dans laquelle l'extrémité courbée (31) de la branche de lunettes (3) peut être insérée et y est logée de manière à pouvoir pivoter à l'état inséré,
- la zone de maintien (5) et l'extrémité courbée (31) présentant des surfaces correspondantes (311, 312), par lesquelles au moins deux positions d'encliquetage sont formées.

2. Charnière selon la revendication 1, **caractérisée en ce que** la charnière ne comporte aucun moyen de fixation, en particulier aucune vis.

3. Charnière selon la revendication 1 ou 2, **caractérisée en ce que** la charnière est constituée de trois pièces, à savoir la face avant de la monture (1), la branche de lunettes (3) et l'agrafe de liaison (2).

4. Charnière selon l'une des revendications précédentes, **caractérisée en ce que** la face avant de la monture (1) forme un cercle de monture pour chacun des deux verres de lunettes (4), chaque cercle de monture étant sectionné au niveau d'une extrémité latérale (10) de la face avant de la monture (1), de sorte qu'une partie supérieure (11) et une partie inférieure (12) du cercle de monture sont formées et que les deux parties peuvent être séparées l'une de l'autre pour permettre l'insertion et le retrait des verres (4).

5. Charnière selon la revendication 4, **caractérisée en ce que** l'agrafe de liaison (2) est conçue pour maintenir l'une contre l'autre la partie supérieure (11) du cercle de monture et la partie inférieure (12) du cercle de monture afin de fixer le verre de lunettes (4).

6. Charnière selon l'une des revendications précédentes, **caractérisée en ce que** la face avant de la monture (1) présente une contre-dépouille (121) conçue de manière à assurer une liaison de forme avec l'agrafe de liaison (2).

7. Charnière selon l'une des revendications précédentes, **caractérisée en ce que** la zone de maintien et l'extrémité courbée (31) de la branche de lunettes (3) présentent chacune plusieurs surfaces (311, 312) plus ou moins courbées.

8. Charnière selon l'une des revendications précédentes, **caractérisée en ce que** l'extrémité courbée (31) de la branche de lunettes (3) est souple et se déforme élastiquement lorsqu'elle est en place.

9. Charnière selon l'une des revendications précédentes, **caractérisée en ce que** les courbures extérieures (13, 21) de l'agrafe de liaison (2) et de la face avant de la monture (1) sont conçues pour être souples.

10. Charnière selon la revendication 9, **caractérisée en ce que** les courbures extérieures (13, 21) sont conçues de manière à serrer l'extrémité courbée (31) entre ces courbures extérieures(13, 21) sous l'effet d'une force élastique.

11. Charnière selon l'une des revendications précédentes, **caractérisée en ce que** la charnière comporte un dispositif de sécurité empêchant la branche de lunettes de tomber de la zone de maintien (5), l'extrémité courbée (31) étant conçue de telle sorte qu'elle doive être déformée élastiquement pour être insérée dans la zone de maintien (5) ou en être retirée.

12. Charnière selon l'une des revendications précédentes, **caractérisée en ce que** la charnière présente une première position d'encliquetage à un angle compris entre 80° et 100°, de préférence 90°, et une deuxième position d'encliquetage à un angle compris entre 170° et 190°, de préférence 180°.

13. Charnière selon la revendication 12, **caractérisée en ce que** la charnière présente une troisième position d'encliquetage à un angle compris entre 35° et 50°, de préférence 40°.

14. Charnière selon l'une des revendications précédentes, **caractérisée en ce que** la charnière est en métal.

15. Monture de lunettes comprenant deux charnières de lunettes selon l'une des revendications précédentes.
